Europäisches Patentamt

European Patent Office

Office européen des brevets

(19)

(11) Publication number: **0 407 045 A1**

# EUROPEAN PATENT APPLICATION

(12)

(21) Application number: 90306474.9

(22) Date of filing: 14.06.90

(51) Int. Cl.5: **C01B 15/10**

(30) Priority: 27.06.89 JP 162648/89

(43) Date of publication of application:
**09.01.91 Bulletin 91/02**

(84) Designated Contracting States:
**AT BE CH DE DK ES FR GB GR IT LI LU NL SE**

(71) Applicant: **TOKAI DENKA KOGYO KABUSHIKI KAISHA**
**6-1, 1-chome Ohtemachi, Chiyoda-ku Tokyo(JP)**

(72) Inventor: **Sato, Kanji**
**580, Fujioka**
**Fuji -shi, Shizuoka-ken(JP)**
Inventor: **Kondo, Tomomasa**
**580, Fujioka**
**Fuji-shi, Shizuoka-ken(JP)**

(74) Representative: **Cropp, John Anthony David et al**
**MATHYS & SQUIRE 10 Fleet Streeteet**
**London, EC4Y 1AY(GB)**

(54) **Safe sodium percarbonate composition.**

(57) A safe sodium percarbonate composition is obtained by incorporating therein at least one compound selected from urea, urea derivatives, acetates, amino acids having not more than 7 carbon atoms or salts thereof, triazine compounds or guanidine compounds.

EP 0 407 045 A1

Xerox Copy Centre

## SAFE SODIUM PERCARBONATE COMPOSITION

### Background of the Invention

The present invention relates to a safe sodium percarbonate composition and more particularly to a safe sodium percarbonate composition having a high pure substance content suitable for use as a fiber bleaching agent, a detergent, a slime removing agent, an oxygen generating agent or a sterilizer, alone or as a mixture with other ingredients.

Sodium percarbonate is an oxidative substance, and when mixed with a combustible substance it may easily ignite and burn. Further, when a mixture thereof with a combustible substance is ignited, there is a danger of vigorous burning due to the combustion promoting action of oxygen generated by the decomposition of sodium percarbonate.

Incorporating an incombustible diluent in such mixture of sodium percarbonate and a combustible to lower the concentration of effective oxygen may be one method for reducing the danger of combustion. In this method, however, it is necessary to use a large amount of such diluent, with the result that not only is the concentration of active oxygen lowered but also the effect of sodium percarbonate is deteriorated markedly. For solving this problem, there is proposed a method using sodium chloride or sodium sulfate in Japanese Patent Laid-Open No.11210/1985. According to this proposed method, however, the danger suppressing effect is very poor, and it is necessary to use a large amount of sodium chloride or sulfate, thus causing decrease of the amount of active oxygen, so this method is not practically applicable.

It is the object of the present invention to overcome the above-mentioned drawbacks of the prior art.

### Summary of the invention

Having made extensive studies in view of the aforementioned problems, the present inventors found that the aforementioned problems so far unsolved by the prior art could be solved by incorporating in sodium percarbonate at least one compound selected from the group consisting of urea, urea derivatives, acetates, amino acids having not more than 7 carbon atoms or salts thereof, triazines and guanidines.

More specifically, the present invention provides a safe sodium percarbonate composition having a high pure substance content and comprising sodium percarbonate and 2.5-35 wt% of at least one compound incorporated therein as a danger suppressing agent, the said at least one compound being selected from the group consisting of urea, urea derivatives, acetates, amino acids having not more than 7 carbon atoms or salts thereof, triazine compounds and guanidine compounds. Also, the present invention provides a safe sodium percarbonate composition having a high pure substance content and further containing in addition to the above ingredients, at least one compound as an adjuvant selected from the group consisting of alkali metal carbonates, alkali metal bicarbonates, alkali metal sulfates and sodium borate, wherein the total amount of the foregoing danger suppressing agent adjuvant is not more than 35wt%.

### Detailed Description of the Invention

Examples of urea derivatives which may be used in the present invention include isocyanuric acid, allantoin, biuret, hydantoin, 5,5-dimethylhydantoin, semicarbazide hydrochloride semicarbazide sulfate, semicarbazide phosphate, 4-aminouracil, guanylurea hydrochloride, guanylurea sulfate, guanylurea phosphates barbituric acid, N-methylurea, 1,1-dimethylurea, and 1,3-dimethylurea. Examples of acetates include sodium acetate, potassium acetate, magnesium acetate and calcium acetate Examples of amino acids include glycine, glutamic acid, sodium glutamate, glutamine, glycylglycine, histidine hydrochloride histidine sulfate, arginine, alanine, $\beta$-alanine, sodium asparaginate, asparagine threonine, serine, and sarcosine. Examples of triazines include triazine, melamine, acetoguanamide, and ammelide. Examples of guanidines include guanidine hydrochloride guanidine sulfate, guanidine phosphate, guanidine carbonate, guanidine sulfamate, aminoguanidine hydrochloride, aminoguanidine sulfate, aminoguanidine phosphate, aminoguanidine bicarbonate, aminoguanidine sulfamate, and dicyandiamide.

The amount of the danger suppressing agent used in the present invention is in the range of 2.5 to 35 wt%. It is less than 2.5 wt%, a satisfactory effect will not be obtained, while if it is more than 35 wt%, the concentration of effective oxygen will be reduced more than necessary although there will be obtained a satisfactory effect. A preferable range is 5 to 15 wt%.

If the adjuvant used in the present invention is incorporated alone in sodium percarbonate, only a mere diluting effect will be exhibited. A remarkable improvement of the effect can be attained only when it is used together with the danger suppressing agent used in the invention.

The combined use of the adjuvant with the danger suppressing agent in the present invention permits a reduction in the amount of the danger suppressing agent to be used. Besides, the use of an inexpensive adjuvant can afford a more economical and safer composition.

Adjuvants employable in the invention are alkali metal carbonates, alkali metal bicarbonates, alkali metal sulfates, and sodium borate. Examples of alkali metal carbonates are sodium carbonate and potassium carbonate. Examples of alkali metal bicarbonates are sodium bicarbonate and potassium bicarbonate. Examples of alkali metal sulfates are sodium sulfate and potassium sulfate.

Usually, a bleaching agent containing sodium percarbonate is required to contain not less than 10% of active oxygen. Therefore, it is desirable that the total amount of the danger suppressing agent and the adjuvant be not more than 35 wt%.

Other danger suppressing agents may also be incorporated in the composition of the present invention. Examples are boric acid, inorganic magnesium compounds and inorganic aluminum compounds which the present inventors have found useful and proposed separately. Further, a stabilizer, a granulation binder and a coating agent, which are commonly used for sodium percarbonate, may also be incorporated in the composition.

There may he adopted any method for preparing the composition of the present invention provided the ingredients can be intimately mixed thereby. For example, the composition of the present invention can be prepared by mixing the danger suppressing agent and the adjuvant with wet crystals of sodium percarbonate obtained in a crystallizing step, followed by granulation; or by merely mixing them with dry sodium percarbonate crystals or with dry granules of sodium percarbonate obtained by granulation; or by coating according to a conventional method.

Sodium percarbonate is generally in a powdered form. Various testing methods have been proposed to check danger, but the most common testing method for a powdered oxidizing agent is the method defined by the Japanese Fire Defense Law (e.g. Law No.55 issued May 24, 1988; Government Ordinance No.358 issued December 27, 1988; Ordinance No.1 of the Ministry of Home Affairs).

The present inventors have conducted a burning test to check a latent danger of oxidative power and a ball drop type shock sensitivity test to check danger, both in accordance with the testing method for dangerous objects Class 1, powdered substances, defined in the Fire Defense Law.

In the burning test, two mixtures are prepared, One consists of an oxidizing agent and powdered wood at a ratio of 1:1 and the other at a ratio of 8:2 and the burning rate of these mixtures is determined. As a standard substance, a mixture of potassium perchlorate and powdered wood at a, ratio of 1:1 is also determined for burning rate in the same manner. When the burning rate of the oxidizing agent thus determined is lower than that of the standard substance, it is judged that the latent danger of oxidative power is small.

In the ball drop type shock sensitivity test, a steel ball is dropped onto a mixture of 2mg each of an oxidizing agent red phosphorus from a height corresponding to a 50% explosion point of the standard substance, and the degree of explosion is determined. Potassium nitrate is used as the standard substance. When the degree of explosion is lower than that of the standard substance, it is judged that the danger against shock is small. Thus, an overall judgement of danger can be made by these methods.

(Examples)

Examples and Comparative Examples will be described below to illustrate the present invention more concretely. But it is to be understood that the invention is not limited thereto. In all of these examples, the percents mean percents by weight, and the burning rate in the burning test indicates an average value obtained from measurements conducted five times. The "explosion freq. test freq. in ball drop type shock sensitivity test" indicates the number of explosions when a steel ball was dropped from a 50% explosion point of potassium nitrate as the standard substance relative to the number of tests.

Comparative Examples 1-12

The compositions shown in Table 2 were prepared by mixing dry powders of the ingredients described in the same table, using a V-type mixing machine. The standard substances shown in Table 1 and the compositions shown in Table 2 were subjected to the burning test and the ball drop type shock sensitivity test according to the testing method for dangerous objects Class 1, powdered substances, defined by the Fire Defense Law. The results are as set forth in Table 1 and 2. The powdered wood used in the combustion test is not from the peripheral portion of a Japanese cedar but from the whole thereof.

Table 1

| Comp. Ex. No. | Standard Substance | Burning Rate (sec) sample-wooden powder mixing ratio 1:1 | 50% Explosion Point Energy in ball drop type shock sensitivity test |
|---|---|---|---|
| 1. | potassium perchlorate | 300 | - |
| 2. | potassium nitrate | - | 0.35 |

Table 2

| Comp. Ex. No. | Composition (%) | | | Burning Rate (sec) Sample-wooded powder mixing ratio | | Explosion freq./test freq. in ball drop type shock sensitivity test |
|---|---|---|---|---|---|---|
| | Sodium Percarbonate (purity 97%) | Other Ingredients | Effective Oxygen (%) | 1:1 | 8:2 | |
| 3. | 100 | - | 14.8 | 35 | 35 | 17/40 |
| 4. | 60 | sodium carbonate 40 | 8.9 | did not burn | 45 | 7/40 |
| 5. | 50 | sodium carbonate 50 | 7.4 | did not burn | did not burn | 3/40 |
| 6. | 60 | sodium bicarbonate 40 | 8.9 | did not burn | 43 | 5/40 |
| 7. | 50 | sodium bicarbonate 50 | 7.4 | did not burn | did not burn | 0/40 |
| 8. | 60 | sodium sulfate 40 | 8.9 | did not burn | 48 | 3/40 |
| 9. | 60 | anhydrous sodium borate 40 | 8.9 | did not burn | 50 | 3/40 |
| 10. | 60 | sodium chloride 40 | 8.9 | did not burn | 45 | 4/40 |
| 11. | 65 | sodium sulfate 25 sodium carbonate 10 | 9.6 | 40 | 43 | 7/40 |
| 12. | 65 | sodium chloride 25 sodium carbonate 10 | 9.6 | did not burn | 45 | 5/40 |

Examples 1 - 24

The compositions shown in Table 3 below were prepared in the same way as in Comparative Examples 3-12 and then subjected to the burning test and the ball drop type shock sensitivity test also in the same manner as in those comparative examples. The results of the burning test are as set out in Table 3. In all of the working Examples, the explosion freq./test freq. when a steel ball was dropped from a 50% explosion point of potassium nitrate in the ball drop type shock sensitivity test was not more than 10 for 40 times of the test.

Table 3

| Ex. No. | Composition (%) | | | | Burning Rate (sec) Sample-wooden powder mixing ratio | |
| | Sodium Percarbonate (purity 97.0%) | Danger Suppressing Agent | Adjuvant | Effective Oxygen (%) | 1:1 | 8:2 |
|---|---|---|---|---|---|---|
| 1 | 90 | urea 10 | - | 13.3 | did not burn | did not burn |
| 2 | 80 | urea 5 | sodium carbonate 15 | 11.9 | did not burn | did not burn |
| 3 | 77 | urea 3 | sodium carbonate 20 | 11.4 | did not burn | did not burn |
| 4 | 80 | urea 5 | anhydrous sodium borate 15 | 11.9 | did not burn | did not burn |
| 5 | 90 | isocyanuric acid 10 | - | 13.3 | did not burn | did not burn |
| 6 | 90 | allantoin 10 | - | 13.3 | did not burn | did not burn |
| 7 | 90 | biuret 10 | - | 13.3 | did not burn | did not burn |
| 8 | 90 | semicarbazide sulfate 10 | - | 13.3 | did not burn | did not burn |
| 9 | 90 | 4-aminouracil 10 | - | 13.3 | did not burn | did not burn |
| 10 | 90 | guanylurea sulfate 10 | - | 13.3 | did not burn | did not burn |
| 11 | 90 | barbituric acid 10 | - | 13.3 | did not burn | did not burn |
| 12 | 90 | sodium acetate trihydrate 10 | - | 13.3 | did not burn | did not burn |
| 13 | 90 | glycine 10 | - | 13.3 | did not burn | did not burn |
| 14 | 90 | glycylglycine 10 | - | 13.3 | did not burn | did not burn |
| 15 | 90 | ammelide 10 | - | 13.3 | did not burn | did not burn |
| 16 | 90 | guanidine sulfamate 10 | - | 13.3 | did not burn | did not burn |
| 17 | 90 | dicyandiamide 10 | - | 13.3 | did not burn | did not burn |
| 18 | 90 | melamine 10 | - | 13.3 | did not burn | did not burn |
| 19 | 80 | melamine 5 | potassium carbonate 15 | 11.8 | did not burn | did not burn |
| 20 | 80 | melamine 5 | sodium bicarbonate 15 | 11.8 | did not burn | did not burn |
| 21 | 80 | melamine 5 | sodium sulfate 15 | 11.8 | did not burn | did not burn |
| 22 | 80 | melamine 5 | potassium sulfate 15 | 11.8 | did not burn | did not burn |
| 23 | 80 | melamine 5 | anhydrous sodium borate 15 | 11.8 | did not burn | did not burn |
| 24 | 80 | melamine 5 | borax 15 | 11.8 | did not burn | did not burn |

Examples 25 - 35

Sodium carbonate and hydrogen peroxide were reacted together in an aqueous solution and the resulting crystals were separated by centrifugal filtration. The crystals of sodium percarbonate in a wet state thus obtained were mixed with each of the ingredients shown in Table 4 below to give the compositions described in the same table. The resulting mixtures were granulated by extrusion using a granulator equipped with a wire gauze of 1.0 mm dia. meshes. The granules thus obtained were dried and then subjected to the burning test and the ball drop type shock sensitivity test in the same manner as in Comparative Examples 3-12. The results of the burning test are as shown in Table 4. In all of Examples 25-35, the explosion freq./test freq. in the ball drop type shock sensitivity test was not more than 10 for 40 times of the test.

Table 4

| | Composition (%) | | | | Burning Rate (sec) Sample-wooden powder mixing ratio | |
|---|---|---|---|---|---|---|
| Ex. No. | Sodium Percarbonate (purity 97.0%) | Danger Suppressing Agent | Adjuvant | Effective Oxygen (%) | 1:1 | 8:2 |
| 25 | 80 (97.0) | urea 5 | sodium carbonate 15 | 11.9 | did not burn | did not burn |
| 26 | 80 (97.2) | N-methylurea 5 | sodium carbonate 15 | 11.9 | did not burn | did not burn |
| 27 | 80 (96.0) | magnesium acetate tetrahydrate 5 | sodium carbonate 15 | 11.8 | did not burn | did not burn |
| 28 | 80 (97.0) | sodium glutamate 5 | sodium carbonate 15 | 11.9 | did not burn | did not burn |
| 29 | 80 (96.8) | glutamine 5 | sodium carbonate 15 | 11.8 | did not burn | did not burn |
| 30 | 80 (97.3) | sodium asparaginate 5 | sodium carbonate 15 | 11.9 | did not burn | did not burn |
| 31 | 90 (96.5) | urea 5 triazine 5 | - | 13.3 | did not burn | did not burn |
| 32 | 90 (97.1) | acetoguanamide 10 | - | 13.3 | did not burn | did not burn |
| 33 | 90 (96.8) | aminoguanidine sulfate 10 | - | 13.3 | did not burn | did not burn |
| 34 | 80 (96.8) | urea 5 | sodium bicarbonate 15 | 11.8 | did not burn | did not burn |
| 35 | 90 (97.1) | urea 3 melamine 3 glycine 4 | - | 13.3 | did not burn | did not burn |

Example 36

200 g of dry sodium percarbonate granules of 16 to 80 mesh obtained by extrusive granulation were fed into a rotary vacuum dryer equipped with a spray coater and heated to 70° C under reduced pressure while a 30% aqueous solution of sodium L-glutamate was sprayed little by little, whereby 10% of sodium L-glutamate was incorporated in the sodium percarbonate. After the spraying was over, the granules thus treated were dried as they were for 20 minutes. The composition obtained was found to have an effective oxygen concentration of 13.0%. It was subjected to the burning test and the ball drop type shock sensitivity test in the same way as in Comparative Examples 3-12. The results are as set forth in Table 5.

Table 5

| Burning Rate (sec) Sample-powdered wood mixing ratio | | |
|---|---|---|
| 1:1 | 8:2 | Explosion freq./test freq. in ball drop type shock sensitivitity test |
| did not burn | did not burn | 3/40 |

**Claims**

1. A safe sodium percarbonate composition comprising sodium percarbonate and 2.5-35% by weight of at least one compound incorporated therein, said at least one compound being selected from the group (A) consisting of urea, urea derivatives, acetates, amino acids having not more than 7 carbon atoms or salts thereof, triazine compounds and guanidine compounds.

2. A safe sodium percarbonate composition of Claim 1, wherein said urea derivative is isocyanuric acid, allantoin, biuret, hydantoin, 5,5-dimethylhydantoin, semicarbazide hydrochloride, semicarbazide sulfate, semicarbazide phosphate, 4-aminouracil, guanylurea hydrochloride, guanylurea sulfate, guanylurea phosphate, barbituric acid, N-methylurea 1,1-dimethylurea, or 1,3-dimethylurea.

3. A safe sodium percarbonate composition of Claim 1 or claim 2 wherein said acetate is sodium acetate, potassium acetate, magnesium acetate or calcium acetate.

4. A safe sodium percarbonate composition of any one of Claims 1 to 3 wherein said amino acid is glycine, glutamic acid, sodium glutamate, glutamine, glycylglycine, histidine hydrochloride, histidine sulfate, arginine, alanine, β-alanine, sodium asparaginate, asparagine, threonine, serine, or sarcosine.

5. A safe sodium percarbonate composition of any one of Claims 1 to 4 wherein said triazine compound is triazine, melamine, acetoguanamide or ammelide.

6. A safe sodium percarbonate composition of any one of Claims 1 to 5 wherein said guanidine compound is guanidine hydrochloride or guanidine sulfate.

7. A safe sodium percarbonate composition of any one of Claims 1 to 6 further containing as an adjuvant at least one compound selected from the group (B) consisting of alkali metal carbonates, alkali metal bicarbonates, alkali metal sulfates and sodium borate, the total amount of the compounds selected from the groups (A) and (B) being not more than 35% by weight.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | PATENT ABSTRACTS OF JAPAN vol. 9, no. 119 (C-282)(1842), 23 May 1985; & JP-A-6011210 (NIPPON PEROXIDE K.K.) 20.01.1985 | 1 | C 01 B 15/10 |
| A | PATENT ABSTRACTS OF JAPAN vol. 9, no. 171 (C-291)(1894), 16 July 1985; & JP-A-6042206 (NIPPON PEROXIDE K.K.) 06.03.1985 | 1 | |
| A | GB-A-1 495 365 (KAO SOAP CO.) * claims 1-9 * | 1 | |
| A | DE-B-2 458 326 (KAO SOAP CO.) * column 2, line 19 - column 3, line 27 * | 1 | |
| A | US-A-4 316 879 (PINSKY et al.) * column 3, line 11 - column 5, line 61 * | 1 | |
| A | DE-A-2 530 524 (COLGATE-PALMOLIVE CO.) * claims 1,11 * | 1 | |

| TECHNICAL FIELDS SEARCHED (Int. Cl.5) |
|---|
| C 01 B 15/10 C 11 D 3/39 |

The present search report has been drawn up for all claims

| Place of search | Date of completion of search | Examiner |
|---|---|---|
| Berlin | 01 October 90 | CLEMENT J.P. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document